# DEMANDE DE BREVET EUROPEEN

(11) **EP 1 980 600 A1**
(43) Date de publication de la demande: **15.10.2008**
(21) Numéro de dépôt: 08012578.4
(22) Date de dépôt: 29.10.2003
(51) Int. Cl.: C09D 183/06, B29C 33/64, C08G 65/10

(54) **Moule pour une pièce en matériau composite enduit d'un produit de démoulage**

(30) Priorité: 30.10.2002 FR 0213588
(62) Demande divisionnaire de: 03782512.2
(71) Demandeur: EUROCOPTER, 13725 Marignane Cédex (FR)
(72) Inventeur: Boschet, Patrick, 78180 Montigny le Bretonneux (FR); Piel, Emmanuel, 76620 Le Havre (FR)
(74) Mandataire: Pouillot, Laurent Pierre Paul

(57) **Abrégé**

L'invention concerne un moule pour une pièce en matériau composite, ce moule étant enduit d'un produit de démoulage.

Le produit de démoulage comporte :
- 100 parts pondérales d'un constituant de base consistant en un polydiméthylsiloxane époxyde,
- entre 0.5 et 10 parts pondérales d'un agent de polymérisation de ce constituant de base, constitué d'un sel de diaryliodonium,
- au plus 30 parts pondérales d'un modulateur d'anti-adhérence, constitué d'un polymère silicone, et
- au plus 40 parts pondérales d'un agent anti-collage rendant le produit moins gluant avant polymérisation, constitué au moins d'un composé vinyléther.

## Description

La présente invention concerne un moule pour une pièce en matériau composite enduit d'un produit de démoulage. Bien que non exclusivement, la présente invention s'applique particulièrement aux pales d'hélicoptère ou aux éléments de pales d'hélicoptère, qui sont fabriqués de façon usuelle par moulage d'un matériau composite.

On sait que, pour faciliter le démoulage de telles pales ou de tels éléments de pales après polymérisation, on applique préalablement un produit de démoulage sur toute la surface du moule.

Les produits de démoulage connus contiennent une grande proportion de solvant et présentent de ce fait de nombreux inconvénients, tels que l'importance des quantités devant être utilisées et le rejet de composés organiques volatils dans l'environnement.

La présente invention a pour objet de remédier à ces inconvénients. Elle concerne un moule enduit d'un produit de démoulage anti-adhérent sans solvant, particulièrement efficace.

A cette fin, selon l'invention, un moule pour une pièce en matériau composite est enduit d'un produit de démoulage comportant :
- 100 parts pondérales d'un constituant de base consistant en un polydiméthylsiloxane époxyde,
- entre 0.5 et 10 parts pondérales d'un agent de polymérisation de ce constituant de base, constitué d'un sel de diaryliodonium,
- au plus 30 parts pondérales d'un modulateur d'anti-adhérence, constitué d'un polymère silicone, et
- au plus 40 parts pondérales d'un agent anti-collage rendant le produit moins gluant avant polymérisation, constitué au moins d'un composé vinyléther.

De préférence, le modulateur d'anti-adhérence est également constitué d'un polydiméthylsiloxane époxydé.

Comme constituant de base et comme modulateur d'adhérence, on peut respectivement utiliser les produits fabriqués par la société RHODIA en portant respectivement les dénominations commerciales « UV POLY 200 » et « UV RCA 200 ».De même, l'agent de polymérisation à base de sel de diaryliodonium peut être celui fabriqué et vendu sous le nom commercial de « UV CATA 21 1 » par cette société RHODIA.

Ledit agent anti-collage (qui permet entre autre au produit de démoulage de pouvoir être étalé aisément sur les parois du moule et de réduire significativement l'aspect collant laissé par le polydiméthylsiloxane époxydé lorsqu'il n'est pas polymérisé) peut être constitué par un mélange d'un mono-vinyléther et d'un divinyléther.

Selon un mode de réalisation privilégié, le mono vinyléther est celui de dodécyle [formule CH₃-(CH₂)₁₁-O-CH=CH₂], tandis que le di-vinyléther est le 1.4 cyclohexane diméthanoldivinyléther [formule CH₂= CH-O-C₆H₁₀-O-CH=CH₂].

Avantageusement, ledit produit de démoulage adapté au moule comporte :
- entre 5 et 7 parts pondérales de l'agent de polymérisation,
- entre 5 et 10 parts pondérales du modulateur d'anti-adhérence, ce modulateur d'anti-adhérence étant un polydiméthylsiloxane époxydé, et
- l'agent anti-collage étant présent à hauteur de 8 à 12 parts pondérales d'un mono-vinyléther de dodécyle et de 8 à 12 parts pondérales d'un cyclohexane diméthanoldivinyléther.

Encore plus avantageusement, ce produit de démoulage comporte :
- 6 parts pondérales de l'agent de polymérisation,
- 8 parts pondérales du modulateur d'anti-adhérence, et
- l'agent anti-collage étant présent à hauteur de 11,4 parts pondérales d'un mono-vinyléther de dodécyle et de 11,4 parts pondérales d'un cyclohexane diméthanoldivinyléther.

Ainsi, grâce à l'invention, on obtient un produit de démoulage sans solvant qui présente de très bonnes propriétés d'anti-adhérence, notamment en raison de sa réalisation à base de silicone. Ce produit de démoulage présente également de bonnes performances en terme de tenue au collage ou de tenue à la peinture de la pièce composite réalisée par moulage. En effet, en raison des caractéristiques chimiques dudit produit qui est basé sur des siloxanes époxydés, le faible transfert qui peut avoir lieu au cours du moulage, n'a pas d'influence négative significative sur les propriétés de collage ou de tenue à la peinture de la pièce, contrairement à ce qui peut être observé avec des produits de démoulage à base de solvant.

On notera que, par rapport aux produits de démoulage usuels à base de solvant, le produit conforme à l'invention, obtenu à partir du mélange précité, présente également les avantages suivants :
- suppression du problème de rejets de composés organiques volatils,
- réduction de la quantité de produit consommé,
- réduction du temps d'application du produit,
- amélioration des caractéristiques de collage sur le matériau composite, et
- amélioration de l'aspect de surface.

Le produit de démoulage conforme à l'invention polymérise sous l'action des rayonnements ultraviolets ou par voie thermique. Le cycle de polymérisation par voie thermique peut être de 1 heure à 150°C (+/- 5°).

Toutefois, selon les applications envisagées, ce cycle peut être optimisé, par exemple à 30 minutes à 100°C.

Le produit de démoulage de l'invention est liquide et il est appliqué sur la surface du moule, avec une épaisseur très faible (de l'ordre du micron généralement), de préférence de façon manuelle, à l'aide d'un chiffon ou au moyen de lingettes pré imprégnées par ledit produit.

Généralement, il n'est pas nécessaire d'appliquer ce produit sur le moule à chaque moulage. Le nombre d'opération de moulage possible avec un revêtement du produit conforme à la présente invention dépend du type de moulage mis en oeuvre, mais reste généralement équivalent à celui obtenu avec des démoulants usuels à base de solvant.

On notera que le produit de démoulage conforme à l'invention est efficace pour la polymérisation sur moules métalliques ou composites de toute pièce composite, utilisant des résines époxydes de classe inférieure ou égale à 180°C.

## Revendications

1. Moule pour une pièce en matériau composite **caractérisé en ce qu'**il est enduit d'un produit de démoulage comportant :
- 100 parts pondérales d'un constituant de base consistant en un polydiméthylsiloxane époxyde,
- entre 0.5 et 10 parts pondérales d'un agent de polymérisation dudit constituant de base, constitué d'un sel de diaryliodonium,
- entre 5 et 10 parts pondérales d'un modulateur d'anti-adhérence, constitué d'un polymère silicone, et
- au plus 40 parts pondérales d'un agent anti-collage rendant le produit moins gluant avant polymérisation, constitué au moins d'un composé vinyléther.

2. Moule selon la revendication 1, **caractérisé en ce que** ledit modulateur d'anti-adhérence est également constitué d'un polydiméthylsiloxane époxydé.

3. Moule selon l'une quelconque des revendications 1 ou 2, **caractérisé en ce que** ledit agent anti-collage est constitué par un mélange d'un mono-vinyléther et d'un di-vinyléther.

4. Moule selon la revendication 3, **caractérisé en ce que** ledit mono-vinyléther est le mono-vinyléther de dodécyle.

5. Moule selon la revendication 3, **caractérisé en ce que** ledit di-vinyléther est le 1.4 cyclohexane diméthanoldivinyléther.

6. Moule selon l'une quelconque des revendications précédentes, **caractérisé en ce que** ledit produit de démoulage comporte :
- entre 5 et 7 parts pondérales dudit agent de polymérisation,
- entre 5 et 10 parts pondérales dudit modulateur d'anti-adhérence, ce modulateur d'anti-adhérence étant un polydiméthylsiloxane époxyde, et
- **en ce que** ledit agent anti-collage est présent à hauteur de 8 à 12 parts pondérales d'un mono-vinyléther de dodécyle et de 8 à 12 parts pondérales d'un cyclohexane diméthanoldivinyléther.

7. Moule selon la revendication 6, **caractérisé en ce que** ledit produit de démoulage comporte :
- 6 parts pondérales dudit agent de polymérisation,
- 8 parts pondérales dudit modulateur d'anti-adhérence, et
- **en ce que** ledit agent anti-collage est présent à hauteur de 11,4 parts pondérales d'un mono-vinyléther de dodécyle et de 11,4 parts pondérales d'un cyclohexane diméthanoldivinyléther.

8. Lingette ou chiffon imprégné(e) d'un produit de démoulage présentant les caractéristiques de l'une quelconque des revendications 1 à 7.

9. Procédé de moulage d'une pièce en matériau composite **caractérisé en ce que** l'on enduit le moule d'un produit de démoulage comportant :
- 100 parts pondérales d'un constituant de base consistant en un polydiméthylsiloxane époxydé,
- entre 0.5 et 10 parts pondérales d'un agent de polymérisation dudit constituant de base, constitué d'un sel de diaryliodonium,
- entre 5 et 10 parts pondérales d'un modulateur d'anti-adhérence,
- un agent anti-collage rendant le produit moins gluant avant polymérisation, constitué par un mélange d'un mono-vinyléther et d'un di-vinyléther, qui est présent à hauteur d'au plus 40 parts pondérales.

10. Procédé selon la revendication 8, **caractérisé en ce que** ledit modulateur d'anti-adhérence est également constitué d'un polydiméthylsiloxane époxydé.

11. Procédé selon la revendication 8 ou 9, **caractérisé en ce que** ledit mono-vinyléther est le mono-vinyléther de dodécyle.

12. Procédé selon la revendication 8 ou 9, **caractérisé en ce que** ledit divinyléther est le 1.4 cyclohexane diméthanoldivinyléther.

13. Procédé selon l'une quelconque des revendications 8 à 11, **caractérisé en ce que** ledit produit de démoulage comporte :
- entre 5 et 7 parts pondérales dudit agent de polymérisation,
- entre 5 et 10 parts pondérales dudit modulateur d'anti-adhérence, ce modulateur d'anti-adhérence étant un polydiméthylsiloxane époxydé, et
- **en ce que** ledit agent anti-collage est présent à hauteur de 8 à 12 parts pondérales d'un mono-vinyléther de dodécyle et de 8 à 12 parts pondérales d'un cyclohexane diméthanoldivinyléther.

14. Procédé selon la revendication 13, **caractérisé en ce que** ledit produit de démoulage comporte :
- 6 parts pondérales dudit agent de polymérisation,
- 8 parts pondérales dudit modulateur d'anti-adhérence, et
- **en ce que** ledit agent anti-collage est présent à hauteur de 11,4 parts pondérales d'un mono-vinyléther de dodécyle et de 11,4 parts pondérales d'un cyclohexane diméthanoldivinyléther.

15. Procédé selon l'une quelconque des revendications 9 à 14, **caractérisé en ce que** l'on enduit la surface du moule avec une épaisseur du produit de démoulage de l'ordre du micron.

16. Procédé selon l'une quelconque des revendications 9 à 15, **caractérisé en ce que** l'on enduit la surface du moule avec une lingette ou un chiffon imprégné(e) du produit de démoulage.

17. Procédé selon l'une quelconque des revendications 9 à 16, **caractérisé en ce que** l'on polymérise le produit de démoulage sous l'action de rayonnements ultraviolets.

18. Procédé selon l'une quelconque des revendications 9 à 17, **caractérisé en ce que** l'on polymérise le produit de démoulage par voie thermique.

19. Procédé selon la revendication 18, **caractérisé en ce que** le cycle de polymérisation est de 1 heure à 150°C +/- 5°C.

20. Procédé selon la revendication 18, **caractérisé en ce que** le cycle de polymérisation est de 30 minutes à 100°C.

21. Procédé selon l'une quelconque des revendications 9 à 20 dans lequel la pièce en matériau composite est une pale d'hélicoptère ou un élément d'une telle pale.
